# EUROPÄISCHE PATENTSCHRIFT

(11) **EP 0 751 330 B1**
(45) Veröffentlichungstag und Bekanntmachung des Hinweises auf die Patenterteilung: **15.03.2000**
(21) Anmeldenummer: 96107137.0
(22) Anmeldetag: 07.05.1996
(51) Int. Cl.: F16L 37/088

(54) **Steckkupplung für Druckmittelsysteme**
Plug coupling for pressure fluid systems
Raccord emboîtable pour systèmes à fluide sous pression

(30) Priorität: 30.06.1995 DE 19523830
(43) Veröffentlichungstag der Anmeldung: 02.01.1997
(73) Patentinhaber: Armaturenfabrik Hermann Voss GmbH + Co., 51688 Wipperfürth (DE)
(72) Erfinder: Kaminski, Volker, 58553 Halver (DE)
(74) Vertreter: Patentanwälte Dr. Solf & Zapf

(56) Entgegenhaltungen:
- EP-A- 0 226 689
- EP-A- 0 647 803
- GB-A- 799 155
- US-A- 3 574 359
- US-A- 4 413 846
- US-A- 4 471 978
- US-A- 4 703 958
- US-A- 5 380 049

## Beschreibung

Die vorliegende Erfindung betrifft eine Steckkupplung für Druckmittelsysteme gemäß dem Oberbegriff des Patentanspruchs 1.

Derartige Steckkupplungen werden beispielsweise in Kraftfahrzeug-Bremssystemen, insbesondere bei LKW-Luftdruckbremsanlagen, eingesetzt. Speziell (aber natürlich nicht nur) bei diesem Anwendungsfall besteht das Problem, daß in manchen Fällen, z.B. bei ungünstigen Platzverhältnissen bzw. Einbausituationen, vom Monteur beim Stecken nicht sorgfältig genug auf ein korrektes, vollständiges Stecken geachtet wird, so daß in der Praxis Prüfvorgänge eingeschaltet werden müssen, um zu verhindern, daß bei einer Druckbeaufschlagung, beispielsweise beim Aufbau von Bremsdruck, die Kupplung plötzlich ungewollt getrennt wird.

Bei einer solchen, aus der US-A-3 574 359 bekannten Steckkupplung sind in dem Muffenteil zwei gleichartige Rastelemente axial hintereinander angeordnet, wobei diese Rastelemente jeweils von zwei Einzelelementen gebildet sind. Es handelt sich speziell um Drahtfederklammern, die jeweils etwa U-förmig gebogen sind und paarweise von diametral gegenüberliegenden Seiten in Aufnahmeschlitze des Muffenteils eingesetzt sind. Um zu vermeiden, daß diese Drahtklammern herausfallen könnten, weist das Muffenteil eine Hülse auf, die über den Bereich der Halteelemente aufschraubbar ist. Diese Hülse ist ferner auch zum Lösen der Kupplungsverbindung abschraubbar, so daß dann die Drahtklammern jeweils entfernt werden können. Diese bekannte Kupplung besteht somit aus recht vielen Einzelteilen (vier einzelne Drahtklammern und zusätzliche Sicherungshülse), wobei die kleinen Drahtklammern auch einer recht großen Verlustgefahr unterliegen. Die Herstellung und Montage der bekannten Kupplung wird hierdurch auch recht aufwendig. Aufgrund der Gleichartigkeit der beiden Halteelemente sind beim Einstecken des Steckerteils in beiden Raststellungen jeweils die gleichen, vermutlich recht hohen Steckkräfte erforderlich.

Aus der EP-B1-0 226 689 ist eine weitere "Kupplungsvorrichtung" bekannt, bei der zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Dabei ist in dieser Vorraststellung eine Undichtigkeit derart gewährleistet, daß dieser Zustand akustisch durch ein Leckgeräusch wahrnehmbar ist, ohne daß es zu einem vollständigen, plötzlichen Druckabfall kommen kann. Die Kupplung kann dann bei Auftreten des Leckgeräusches weiter in die korrekt abgedichtete und arretierte "Vollraststellung" überführt werden. Bei der bekannten Kupplungsvorrichtung ist ein aus im Querschnitt kreisförmigem Federdraht gebogener Verriegelungsring nach Art eines Drahtsprengringes vorgesehen, der in einer ersten Ausführungsform in einer Aussparung des Gehäuseteils, dort "Mutterstück" genannt, angeordnet ist und für Vor- und Vollraststellung nacheinander mit zwei separaten, ringnutförmigen Ausnehmungen des Steckerteils, dort "Gegenstück" genannt, zusammenwirkt. In einer zweiten Ausführungsform ist der Verriegelungsring auf dem Stecker (Gegenstück) angeordnet und wirkt mit zwei ringnutförmigen Aussparungen im Gehäuseteil (Mutterstück) zusammen. Die jeweils zwei mit dem Verriegelungsring zusammenwirkenden Aussparungen führen zu einer herstellungsmäßig recht aufwendigen Kontur, zumal zum Überführen von der Vorrastung in die Vollrastung jeweils die eine, erste Aussparung eine "schräge Führungsoberfläche" aufweisen muß. Außerdem treten bei Drahtsprengringen Nachteile bezüglich der Steckkräfte sowie Zentrierungsprobleme auf.

Die US-A-5 380 049 beschreibt eine Rohrkupplung, bei der innerhalb eines Aufnahmegehäuses eine Vielzahl von widerhakenartig schräg in die Aufnahmeöffnung ragenden Lippen vorgesehen ist. Diese mit einem Gehäuseteil einstückig und jeweils als kurzes Kreisringsektorstück ausgebildeten Lippen sind in zwei diametral gegenüberliegenden, in Steckrichtung verlaufenden Reihen angeordnet. Das Einsteckende des Rohres weist drei Raststufen auf. Durch diese Ausgestaltung wird das Rohrende beim Einstecken nicht nur in einer definierten Stellung gehalten, sondern es erfolgt eine Arretierung in nahezu jeder Einsteckposition, und zwar jeweils durch mindestens zwei diametral gegenüberliegende Lippen.

Der vorliegenden Erfindung liegt die Aufgabe zugrunde, eine gattungsgemäße Steckkupplung zu schaffen, die bei konstruktiv einfacher und herstellungsmäßig kostengünstiger Ausgestaltung verbesserte Steck- und Arretierungseigenschaften aufweist.

Erfindungsgemäß wird dies durch die kennzeichnenden Merkmale des neuen Anspruchs 1 gelöst. Demnach besteht das Vorrastelement in der Hauptsache aus mehreren über den Umfang verteilt angeordneten Rastelementen, die als federelastische, schräg in Einsteckrichtung und radial nach innen ragende, in der Vorraststellung mit ihren freien Enden die Raststufe zur Arretierung des Steckerteils hintergreifende Rastzungen ausgebildet sind. Diese mehreren zungenartigen Rastelemente sind dabei zusammen mit einem in einer Aufnahmeringnut des Gehäuseteils sitzenden Ringkörper als einstückiges Formteil aus Kunststoff ausgebildet.

Durch die erfindungsgemäße Ausgestaltung verringern sich zunächst die Einzelteile, wobei das Vorrastelement auch sehr preiswert insbesondere als Kunststoff-Formteil hergestellt werden kann. Aufgrund der Lagerung innerhalb des Gehäuseteils unterliegen die Rastelemente vorteilhafterweise auch nur einer außerordentlich geringen oder gar keiner Verlustgefahr. Beim Einstecken des Steckerteils genügt zunächst in der Vorraststellung eine relativ geringe Steckkraft, um die federelastischen Rastzungen radial nach außen zu bewegen, bis sie dann mit ihren freien Enden die Raststufe des Steckerteils hintergreifen. Nach weitergehendem Einstecken des Steckerteils erfolgt dann in der Vollraststellung die "normale" Arretierung des Steckerteils mittels des zusätzlichen Halteelementes, welches vorteilhafterweise unterschiedlich zu dem Vorrastelement ausgebildet ist, um entsprechend hohe Haltekräfte zu erreichen.

Bei dem in der Vollraststellung wirksamen, bevorzugt als radialelastische Halteringklammer ausgebildeten Halteelement handelt es sich mit Vorteil ebenfalls um ein Kunststoff-Formteil, welches daher sehr wirtschaftlich herstellbar ist. Zudem lassen sich auch hierbei durch eine spezielle formmäßige Ausgestaltung, die im folgenden noch genauer erläutert werden wird, auf einfache Weise besonders günstige Rast- bzw. Arretiereigenschaften erreichen.

In weiteren Unteransprüchen sowie auch in der nachfolgenden Beschreibung sind noch weitere vorteilhafte Ausgestaltungsmerkmale der Erfindung enthalten.

Anhand eines in der Zeichnung dargestellten, bevorzugten Ausführungsbeispiel soll im folgenden die Erfindung näher erläutert werden. Dabei zeigen:
- Fig. 1: einen Halb-Axialschnitt durch eine erfindungsgemäße Steckkupplung in einem Zustand vor dem Einstecken,
- Fig. 2: einen Halb-Axialschnitt durch die erfindungsgemäße Steckkupplung in der Vorraststellung und
- Fig. 3: eine Ansicht analog zu Fig. 1 und 2 der Steckkupplung in der Vollraststellung.

In den verschiedenen Figuren der Zeichnung sind gleiche Teile stets mit den gleichen Bezugszeichen versehen und werden daher in der Regel auch jeweils nur einmal beschrieben.

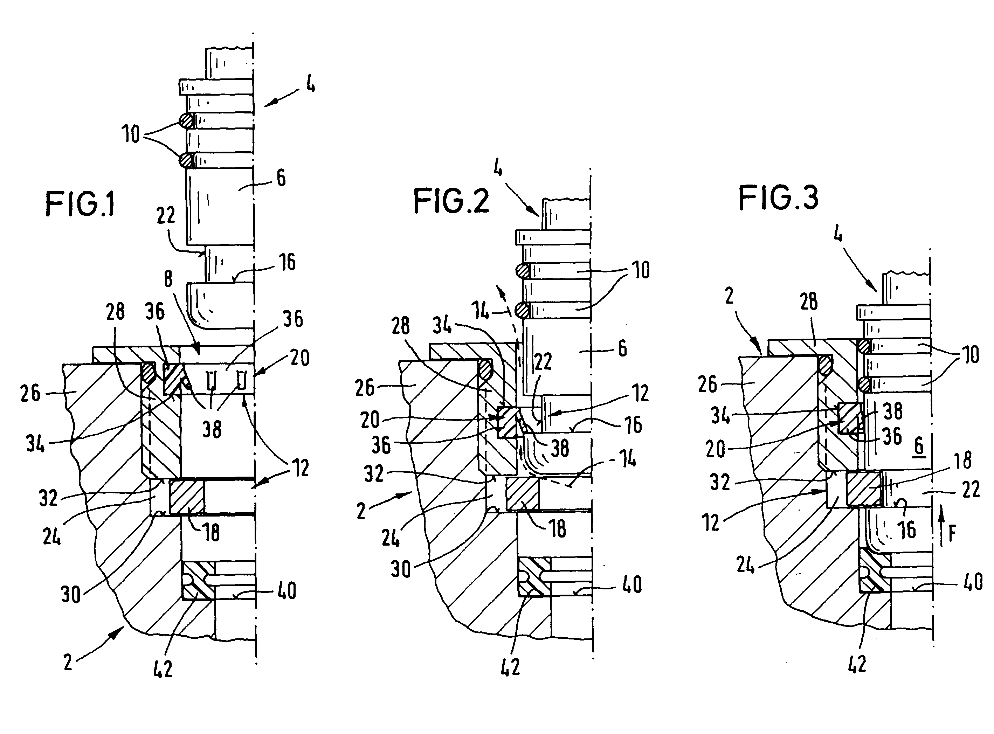

Wie sich aus den Fig. 1 bis 3 ergibt, besteht eine erfindungsgemäße Steckkupplung aus einem Gehäuseteil 2 und einem Steckerteil 4. Das Steckerteil 4 ist mit einem Steckerschaft 6 in eine Aufnahmeöffnung 8 des Gehäuseteils 2 einsteckbar und hierbei über mindestens eine Umfangsdichtung 10 - im dargestellten Ausführungsbeispiel sind zwei Umfangsdichtungen 10 vorgesehen - gegen die Aufnahmeöffnung 8 abgedichtet sowie über eine Verriegelungseinrichtung 12 gegen Lösen arretierbar. Die Verriegelungseinrichtung 12 ist derart ausgebildet, daß einerseits eine teilgesteckte Vorraststellung (Fig.2) und andererseits eine ganz gesteckte Vollraststellung (Fig.3) gewährleistet sind. In der bereits gegen Lösen arretierten Vorraststellung liegt eine derart unvollständige Abdichtung vor, daß im Falle einer Druckbeaufschlagung mit einem Druckmedium, insbesondere Druckluft, ein akustisch wahrnehmbares Leckgeräusch erzeugt wird. Es handelt sich hierbei um eine definiert begrenzte Undichtigkeit bzw. eine durch die Anordnung der Umfangsdichtung(en) 10 relativ zum Gehäuseteil 2 bewirkte Bildung eines "Drosselspaltes", wodurch das Druckmedium entsprechend der gestrichelten Pfeile 14 in Fig. 2 dosiert ausströmt und dabei das Leckgeräusch insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall ausgehend von der Vorraststellung die Steckkupplung durch weitergehendes Stecken in die Vollraststellung überführt werden kann.

Die Verriegelungseinrichtung 12 besteht einerseits aus einer radialen Raststufe 16 des einen Kupplungsteils - im dargestellten, bevorzugten Ausführungsbeispiels des Steckerteils 4 - sowie andererseits bevorzugt aus einer radialelastischen Halteringklammer 18 (oder einem gleichartigen Halteelement) und einem zusätzlichen Vorrastelement 20 des anderen Kupplungsteils - wie dargestellt des Gehäuseteils 2. Eine "kinematische Umkehr", wobei die Raststufe 16 im Gehäuseteil 2 gebildet und das Halteelement bzw. die Halteringklammer 18 sowie das Vorrastelement 20 am Steckerteil 4 angeordnet wären, liegt jedoch ebenfalls im Rahmen der Erfindung.

Die Halteringklammer 18 gewährleistet die Vollraststellung (Fig. 3), indem sie dann mit der Raststufe 16 rastend zusammenwirkt. Das Vorrastelement 20 ist der Halteringklammer 18 in Einsteckrichtung derart vorgeordnet, daß in der Vorraststellung (Fig. 2) die Raststufe 16 mit dem Vorrastelement 20 rastend zusammenwirkt.

Im dargestellten, bevorzugten Ausführungsbeispiel ist die gehäuseteilseitige Raststufe 16 als axiale Begrenzungsfläche einer Außenringnut 22 des Steckerschaftes 6 gebildet. Ferner ist die Halteringklammer 18 vorzugsweise in einer Innenringnut 24 des Gehäuseteils 2 gelagert. Hierbei ist es zudem besonders vorteilhaft, wenn das Gehäuseteil 2 aus zwei lösbar verbundenen Teilen besteht, nämlich einem Basisteil 26 und einem in eine Öffnung des Basisteils 26 einsetzbaren, im wesentlichen hohlzylindrischen Einsatzteil 28. Die die Halteringklammer 18 lagernd aufnehmende Innenringnut 24 ist dabei vorteilhafterweise axial zwischen einer Stufenfläche 30 des Basisteils 26 und einer Stirnfläche 32 des Einsatzteils 28 gebildet. Vorzugsweise sind die beiden Teile 26, 28 über eine Gewindeverbindung verbunden, indem das Einsatzteil 28 als Einschraubteil mit einem Außengewinde in ein Innengewinde des Basisteils 26 eingeschraubt bzw. einschraubbar ist. Es kann jedoch auch eine beliebige andere Verbindungsart, wie eine Bajonettverbindung und/oder eine Rastverbindung (schnappbare Form- oder Kraftformschlußverbindung) vorgesehen sein. Aufgrund dieser bevorzugt vorgesehenen Zweiteiligkeit des Gehäuseteils 2 ist ein Lösen der Verbindung nach dem Einstecken auf einfache Weise möglich, indem das Einsatzteil 28 vom Basisteil 26 gelöst und dann zusammen mit dem Steckerteil 4 sowie auch mit dem Vorrastelement 20 und gegebenenfalls mit dem mit dem Steckerschaft verrasteten Halteelement 18 entnommen wird.

Es ist nun ferner wesentlich, daß das Vorrastelement 20 aus einem in einer Aufnahmeringnut 34 des Gehäuseteils 2, insbesondere des Einsatzteils 28, sitzenden Ringkörper 36 und mindestens einem mit dem Ringkörper 36 verbundenen, in radialer Richtung federelastisch beweglichen Rastelement 38 besteht, und zwar sind mehrere über den Umfang des Ringkörpers 36 verteilt angeordnete Rastelemente 38 vorhanden. In der bevorzugten Ausführungsform ist jedes Rastelement 38 als schräg in Einsteckrichtung und radial nach innen ragende, federelastische Rastzunge ausgebildet, die mit dem Ringkörper 36 einstückig verbunden ist, und diese Rastzungen hintergreifen in der Vorraststellung (Fig. 2) mit ihren freien Enden die Raststufe 16 zur Arretierung des Steckerteils 4. Die Rastzungen bilden somit widerhakenartige Federlamellen. Aufgrund der Federelastizität der Rastzungen braucht der Ringkörper 36 selbst nicht unbedingt radialelastisch verformbar zu sein. Vorzugsweise ist aber der Ringkörper 36 zumindest zwecks Montage derart geschlitzt, daß er auf einfache Weise unter radialelastischer Verformung in die Aufnahmeringnut 34 eingesetzt werden kann. Die durch die geschlitzte Ausführung, d.h. durch eine Unterbrechung des Ringumfanges, erreichte Radialelastizität kann auch für die Vorrast-Funktion von Vorteil sein, indem die Wirkung der Rastelemente zumindest unterstützt wird; eventuell kann auf spezielle Rastelemente, wie die Rastzungen, auch ganz verzichtet werden.

Je nach axialer Position des Vorrastelementes 20 ist dieses bzw. sind die Rastelemente 38 so auszubilden, daß das Einstecken des Steckerschaftes 6 nicht behindert wird. Beispielsweise wäre bei der Anordnung nach Fig. 1 zu gewährleisten, daß das Vorrastelement 20 die Umfangsdichtung(en) 10 ungehindert "durchläßt". Bei der sich diesbezüglich unterscheidenden Anordnung des Vorrastelementes 20 gemäß Fig. 2 und 3, wobei das Vorrastelement 20 in der Vollraststellung "unterhalb" der Umfangsdichtungen 10 angeordnet ist, wäre dies nicht unbedingt notwendig.

Das erfindungsgemäße Vorrastelement 20 ist besonders einfach und preiswert herstellbar, wenn es als Formteil aus Kunststoff gebildet ist. Dies bedeutet, daß die Rastelemente 38 einstückig mit dem Ringkörper 36 ausgebildet sind.

Bevorzugt ist auch das Halteelement, insbesondere in seiner Ausführung als Halteringklammer 18, als Formteil aus Kunststoff gebildet. Die Halteringklammer 18 weist einen den Ringumfang unterbrechenden Schlitzbereich auf, wodurch sie radialelastisch spreizbar bzw. verengbar ist (in der Zeichnung nicht erkennbar). Es ist besonders vorteilhaft, wenn die Halteringklammer 18 einen rechteckigen Ringquerschnitt aufweist (bezogen auf die Schnittebene in axialer bzw. radialer Richtung; vgl. die Zeichnungsfiguren). Diese Ausführung ist für die Arretierungseigenschaften (Rastverhalten, Haltekräfte) vorteilhaft.

In einer weiteren, in der Zeichnung nicht zu erkennenden Ausgestaltung der Erfindung ist das Halteelement bzw. die Halteringklammer 18 durch mindestens Dreipunktanlage (mindestens drei über den Umfang verteilte Anlagepunkte) zur Gehäuseteil-Aufnahmeöffnung 8 (bzw. zum Steckerschaft) 6 bezüglich der Steckachse zentriert gehalten. Diese Anlagepunkte können beispielsweise im etwa mittigen Ringbereich dem Schlitz gegenüberliegend einerseits und im Bereich der dem Schlitz benachbarten freien Ringenden andererseits angeordnet sein. In den dann jeweils dazwischenliegenden Bereichen ist die Radialelastizität gewährleistet.

Gemäß einer weiteren vorteilhaften Ausgestaltung der Erfindung ist innerhalb der Aufnahmeöffnung 8 auf einer Stufenfläche 40 ein bevorzugt als gummielastisches Pufferelement ausgebildetes Federelement 42 derart angeordnet, daß in der Vollraststellung (Fig. 3) das Steckerteil 4 durch Anlage des Steckerschaftes 6 an dem Federelement 42 mit einer axial entgegen der Einsteckrichtung wirkenden Kraft F beaufschlagt wird, so daß die Halteringklammer 18 trotz eines grundsätzlich vorhandenen Axialspiels in Anlage an der Raststufe 16 gehalten wird.

## Patentansprüche

1. Steckkupplung für Druckmittelsysteme, bestehend aus zwei Kupplungsteilen, und zwar einem Gehäuseteil (2) und einem Steckerteil (4), wobei das Steckerteil (4) mit einem Steckerschaft (6) über mindestens eine Umfangsdichtung (10) abgedichtet in eine Aufnahmeöffnung (8) des Gehäuseteils (2) einsteckbar und über eine Verriegelungseinrichtung (12) gegen Lösen arretierbar ist, wobei die Verriegelungseinrichtung (12) derart ausgebildet ist,daß eine teilgesteckte Vorraststellung (Fig.2) und eine ganz gesteckte Vollraststellung (Fig. 3) gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch, erzeugt wird, und wobei in der Vollraststellung eine vollständige, druckdichte Abdichtung vorliegt, wobei die Verriegelungseinrichtung (12) einerseits aus einer radialen Raststufe (16) des Steckerteils (4) und andererseits aus im Gehäuseteil (2) gelagerten Rastmitteln, und zwar aus einem mit der Raststufe (16) in der Vollraststellung (Fig.3) rastend zusammenwirkenden, elastisch verformbaren Halteelement (18) sowie einem dem Halteelement (18) in Einsteckrichtung vorgeordneten, in der Vorraststellung (Fig. 2) mit der Raststufe (16) rastend zusammenwirkenden Vorrastelement (20) besteht,
**dadurch gekennzeichnet,** daß das Vorrastelement (20) mehrere über den Umfang der Aufnahmeöffnung (8) verteilt angeordnete, in radialer Richtung federelastisch bewegliche Rastelemente (38) aufweist, die als federelastische, schräg in Einsteckrichtung und radial nach innen ragende, in der Vorraststellung mit ihren freien Enden die Raststufe (16) zur Arretierung des Steckerteils (4) hintergreifende Rastzungen ausgebildet sind, wobei die Rastelemente (38) zusammen mit einem in einer Aufnahmeringnut (34) des Gehäuseteils (2) sitzenden Ringkörper (36) als einstückiges Formteil aus Kunststoff ausgebildet sind.

2. Steckkupplung nach Anspruch 1,
**dadurch gekennzeichnet,** daß die Raststufe (16) durch eine Außenringnut (22) des Steckerschaftes (6) gebildet ist.

3. Steckkupplung nach Anspruch 1 oder 2,
**dadurch gekennzeichnet,** daß das Halteelement als radialelastische Halteringklammer (18) ausgebildet und in einer Innenringnut (24) des Gehäuseteils (2) gelagert ist.

4. Steckkupplung nach Anspruch 3,
**dadurch gekennzeichnet,** daß das Gehäuseteil (2) aus zwei lösbar verbundenen Teilen besteht, nämlich einem Basisteil (26) und einem in eine Öffnung des Basisteils (26) einsetzbaren Einsatzteil (28), wobei die die Halteringklammer (18) lagernd aufnehmende Innenringnut (24) axial zwischen einer Stufenfläche (30) des Basisteils (26) und einer Stirnfläche (32) des Einsatzteils (28) gebildet ist.

5. Steckkupplung nach Anspruch 4,
**dadurch gekennzeichnet,** daß die den mit den Rastelementen (38) einstückig ausgebildeten Ringkörper (36) des Vorrastelementes (20) aufnehmende Aufnahmeringnut (34) in dem Einsatzteil (28) gebildet ist.

6. Steckkupplung nach einem der Ansprüche 1 bis 5,
**dadurch gekennzeichnet,** daß das Halteelement bzw. die Halteringklammer (18) als einstückiges Kunststoff-Formteil ausgebildet ist.

7. Steckkupplung nach einem der Ansprüche 1 bis 6,
**dadurch gekennzeichnet,** daß das Halteelement bzw. die Halteringklammer (18) einen im wesentlichen rechteckigen Ringquerschnitt aufweist.

8. Steckkupplung nach einem der Ansprüche 1 bis 7,
**dadurch gekennzeichnet,** daß das Halteelement bzw. die Halteringklammer (18) durch zumindest Dreipunktanlage bezüglich der Steckachse zentriert ist.

## Claims

1. Plug-in coupling for pressure-medium systems, comprising two coupling parts, specifically a housing part (2) and a plug part (4), it being possible for the plug part (4) to be plugged into a receiving opening (8) in the housing part (2) by way of a plug shank (6) so as to be sealed via at least one circumferential seal (10), and to be locked by means of a locking device (12) against becoming detached, the locking device (12) being designed such that a partly plugged-in pre-latched position (Fig. 2) and a wholly plugged-in, fully latched position (Fig. 3) are ensured, in the pre-latched position there being incomplete sealing such that, in the event of pressure being applied by a pressure medium a signal is produced, especially an acoustically perceptible leakage noise, and, in the fully latched position there being a complete, pressure-tight seal, the locking device (12) comprising, on the one hand, a radial latching step (16) on the plug part (4) and, on the other hand, latching means mounted in the housing part (2), specifically a resiliently deformable retaining element (18) which interacts in a latching manner with the latching step (16) in the fully latched position (Fig. 3) and a pre-latching element (20) which is arranged in front of the retaining element (18) in the plug-in direction and, in the pre-latched position (Fig. 2), interacts in a latching manner with the latching step (16), characterized in that the pre-latching element (20) has a number of latching elements (38) which are arranged distributed over the circumference of the receiving opening (8), can be moved resiliently in the radial direction and are designed as resilient latching tongues which are inclined in the plug-in direction, project radially inwards and, in the pre-latched position, engage with their free ends behind the latching step (16) in order to lock the plug part (4), the latching elements (38), together with an annular element (36) seated in an annular receiving groove (34) in the housing part (2), being designed as a one-piece plastic moulding.

2. Plug-in coupling according to Claim 1, characterized in that the latching step (16) is formed by an outer annular groove (22) in the plug shank (6).

3. Plug-in coupling according to Claim 1 or 2, characterized in that the retaining element is designed as a radially resilient retaining-ring clamp (18) and is mounted in an inner annular groove (24) in the housing part (2).

4. Plug-in coupling according to Claim 3, characterized in that the housing part (2) consists of two detachably connected parts, namely a base part (26) and an insert part (28) which can be inserted into an opening in the base part (26), the inner annular groove (24) accommodating and mounting the retaining-ring clamp (18) being formed axially between a step face (30) on the base part (26) and an end face (32) on the insert part (28) .

5. Plug-in coupling according to Claim 4, characterized in that the annular receiving groove (34) accommodating the annular element (36) of the pre-latching element (20), designed in one piece with the latching elements (38), is formed in the insert part (28).

6. Plug-in coupling according to one of Claims 1 to 5, characterized in that the retaining element or the retaining-ring clamp (18) is designed as a one-piece plastic moulding.

7. Plug-in coupling according to one of Claims 1 to 6, characterized in that the retaining element or the retaining-ring clamp (18) has an essentially rectangular annular cross section.

8. Plug-in coupling according to one of Claims 1 to 7, characterized in that the retaining element or the retaining-ring clamp (18) is centred by making at least three-point contact in relation to the plug-in axis.

## Revendications

1. Raccord à emmanchement pour circuits de fluide sous pression, composé de deux parties de raccord, à savoir d'une partie boîtier (2) et d'une partie mâle (4), dans lequel la partie mâle (4) peut être emmanchée par un fût (6) de partie mâle dans une ouverture réceptrice (8) de la partie boîtier (2), et enfermée à joint étanche par au moins une garniture d'étanchéité périphérique (10) et peut être retenue à l'encontre de la séparation par un dispositif de verrouillage (12), le dispositif de verrouillage (12) étant d'une configuration qui garantit une position de pré-enclenchement partiellement emmanchée (Fig. 2) et une position d'enclenchement complet entièrement emmanchée (Fig. 3), une étanchéité suffisamment incomplète étant présente dans la position de pré-enclenchement pour que, dans le cas d'une sollicitation de pression avec un fluide de pression, un signal, en particulier un bruit de fuite perceptible acoustiquement, soit produit, tandis que, dans la position d'enclenchement complet, on obtient une étanchéité complète, étanche à la pression, le dispositif de verrouillage (12) étant composé, d'une part, d'un épaulement d'enclenchement radial (16) de la partie mâle (4) et, d'autre part, de moyens d'enclenchement montés dans la partie boîtier (2) et, plus précisément d'un élément de retenue (18) élastiquement déformable, qui coopère pour l'enclenchement avec l'épaulement d'enclenchement (16) dans la position d'enclenchement complet (Fig. 3), ainsi que d'un élément de pré-enclenchement (20), placé en amont de l'élément de retenue (18) dans le sens de l'emmanchement, et qui coopère pour l'enclenchement avec l'épaulement d'enclenchement (16) dans la position de pré-enclenchement (Fig. 2),
caractérisé en ce que l'élément de pré-enclenchement (20) présente plusieurs éléments d'enclenchement (38) disposés répartis sur la périphérie de l'ouverture réceptrice (8), mobiles dans la direction radiale avec une élasticité de ressort, et qui sont constitués par des languettes d'enclenchement élastiques à la façon de ressorts, qui font saillie obliquement dans le sens de l'emmanchement et radialement vers l'intérieur et qui, dans la position de pré-enclenchement, s'accrochent derrière l'épaulement d'enclenchement (16) par leurs extrémités libres pour bloquer la partie mâle (4), les éléments d'enclenchement (38) formant une pièce moulée d'un seul tenant en matière plastique avec un corps annulaire (36) qui est appuyé dans une gorge réceptrice annulaire (34) de la partie boîtier (2).

2. Raccord à emmanchement selon la revendication 1, caractérisé en ce que l'épaulement d'enclenchement (16) est formé par une gorge annulaire extérieure (22) du fût (6) de partie mâle.

3. Raccord à emmanchement selon la revendication 1 ou 2, caractérisé en ce que l'élément de retenue est constitué par une agrafe annulaire de retenue (18), élastique dans la direction radiale, et est monté dans une gorge annulaire intérieure (24) de la partie boîtier (2).

4. Raccord à emmanchement selon la revendication 3, caractérisé en ce que la partie boîtier (2) est composée de deux parties pouvant être reliées de façon séparable, à savoir une partie de base (26) et une partie rapportée (28) qui peut être emboîtée dans une ouverture de la partie de base (26), la gorge annulaire intérieure (24) qui reçoit et supporte l'agrafe annulaire de retenue (18) étant formée axialement entre une surface d'épaulement (30) de la partie de base (26) et une surface frontale (32) de la partie rapportée (28).

5. Raccord à emmanchement selon la revendication 4, caractérisé en ce que la gorge réceptrice annulaire (34) qui reçoit le corps annulaire (36) de l'élément de pré-enclenchement (20) réalisé en une seule pièce avec les éléments d'enclenchement (38) est formée dans la partie rapportée (28).

6. Raccord à emmanchement selon une des revendications 1 à 5, caractérisé en ce que l'élément de retenue ou l'agrafe annulaire de retenue (18) est constitué par une pièce moulée en matière plastique d'un seul tenant.

7. Raccord à emmanchement selon une des revendications 1 à 6, caractérisé en ce que l'élément de retenue ou l'agrafe annulaire de retenue (18) présente une section d'anneau sensiblement rectangulaire.

8. Raccord à emmanchement selon une des revendications 1 à 7, caractérisé en ce que l'élément de retenue ou l'agrafe annulaire de retenue (18) est centré par rapport à l'axe d'emmanchement par un appui à au moins trois points.
